# EUROPÄISCHE PATENTANMELDUNG

(11) **EP 1 589 496 A1**
(43) Veröffentlichungstag der Anmeldung: **26.10.2005**
(21) Anmeldenummer: 05008484.7
(22) Anmeldetag: 19.04.2005
(51) Int. Cl.: G07D 7/12

(54) **Anordnung und Verfahren zum Prüfen von optischen Beugungsstrukturen auf Dokumenten**

(30) Priorität: 24.04.2004 DE 102004020661
(71) Anmelder: Smiths Heimann Biometrics GmbH, 07743 Jena (DE)
(72) Erfinder: Hillmann, Jürgen, 07745 Jena (DE); Burkhart, Thomas, 07749 Jena (DE); Kölling, Kevin, 99425 Weimar (DE)
(74) Vertreter: Freitag, Joachim

(57) **Zusammenfassung**

Die Erfindung betrifft eine Anordnung sowie ein Verfahren zum Prüfen von optischen Beugungsstrukturen (z.B. Kinegrammen) auf Dokumenten.

Die Aufgabe, eine neue Möglichkeit zum Prüfen von optischen Beugungsstrukturen auf Dokumenten zu finden, die mit geringem gerätetechnischem Aufwand in kürzester Zeit das Vorhandensein und die Echtheit von optischen Beugungsstrukturen nachzuweisen gestattet, wird erfindungsgemäß gelöst, indem die Sensoreinheit (3) orthogonal über der Auflagefläche des Dokuments (1) angeordnet ist, die Beleuchtungseinheit (2) mindestens zwei monochromatische Lichtquellen (22) enthält, die zur Aussendung von Lichtbündeln unter definierten Einfallswinkeln (42) bezüglich einer auf der Beugungsstruktur (11) errichteten Flächennormale (12) des Dokuments (1) angebracht und sequenziell einschaltbar sind, wobei mindestens eine Lichtquelle (22) einen Einfallswinkel (42) aufweist, der in Richtung und Betrag mit einem Beugungswinkel übereinstimmt, unter dem ein Intensitätsmaximum des strukturspezifisch erzeugten Beugungsmusters (23) entsteht, falls die Beugungsstruktur (11) aus Richtung der Sensoreinheit (3) beleuchtet würde.

## Beschreibung

Die Erfindung betrifft ein Verfahren und eine Anordnung zum Prüfen von optischen Beugungsstrukturen auf Dokumenten, bei der eine Beleuchtungseinheit zum Beleuchten der Beugungsstruktur des Dokuments und eine Sensoreinheit zum Detektieren von unter definierten Winkeln gebeugten Lichtanteilen über einer Auflagefläche des Dokumentes angeordnet sind. Sie ist geeignet zum automatisierten Nachweis der Echtheit von Dokumenten, auf denen Beugungsstrukturen aufgebracht oder in deren Material solche eingearbeitet sind.

Auf Personaldokumenten, ID-Karten, Geldscheinen u.ä. [im weiteren als "Dokumente" bezeichnet] werden zur Vermeidung von Fälschungen verschiedene Sicherheitsmerkmale, wie z.B. optische Beugungsstrukturen (z.B. Kinegramme), Wasserzeichen, Bilder und Hologramme, auf die Oberfläche aufgebracht oder so einlaminiert, dass sie sichtbar bleiben. Dabei wird zwischen Sicherheitsmerkmalen zur visuellen Beurteilung und solchen zur maschinellen Überprüfung unterschieden.
Sicherheitsmerkmale zur visuellen Beurteilung werden unter verschiedenen Neigungswinkeln gegen eine Lichtquelle (auch Tageslicht) mit dem Auge betrachtet und deren bildlicher Gesamteindruck bewertet.
Optische Beugungsstrukturen für die maschinelle Überprüfung sind so gestaltet, dass ein orthogonal zur Dokumentenebene einfallender Laserstrahl für eine bestimmte Beugungsstruktur eine definierte Anzahl von Beugungsmaxima unter ganz bestimmten Winkeln im Halbraum über dem Dokument erzeugt. Die gebeugten Lichtstrahlen können auf einem Schirm sichtbar gemacht (Patent US 2003/0156274 A1, US 2003/0174308 A1) oder mit unter den entsprechenden Raumwinkeln positionierten Empfänger detektiert werden (Patent US 4,537,504, WO 98/55963).
Für eine maschinelle Auswertung haben beide Anordnungen wesentliche Nachteile. Entweder muss das Dokument genau positioniert sein, damit der Laserstrahl auf die optische Beugungsstruktur trifft, oder der Laser mit der zugehörigen Auswerteeinheit muss - wie in US 2003/0156274 A1 beschrieben - nachgeführt werden.
Ein aufgeweiteter Laserstrahl, der die Forderungen an die Positioniergenauigkeit herabsetzen würde, setzt zum schnellen und sicheren Erkennen der abgelenkten Strahlen eine höhere Laserleistung voraus und vergrößert dann die Gefahr von störenden, möglicherweise auch für den Bediener gefährlichen Reflexen aus der Umgebung der zu testenden optischen Beugungsstruktur. Außerdem setzt auch ein aufgeweiteter Strahl voraus, dass sich die optische Beugungsstruktur an einer bestimmten vorher bekannten Stelle des Dokumentes befindet oder das Dokument so positioniert wird, dass sich die optische Beugungsstruktur an einer bestimmten Stelle in der Prüfeinheit befindet.
Zudem erfordert der Einsatz von Lasern in den Prüfgeräten einen mit steigender Laserleistung wachsenden Aufwand bezüglich Strahlungssicherheit, insbesondere wenn Personen das Dokument zur Prüfung im bzw. am Gerät positionieren müssen.

Wenn das Dokument neben der maschinellen Echtheitsprüfung auch optisch gelesen oder datentechnisch erfasst werden soll, so bestehen weitere Nachteile der obigen Prüfmethoden.
Einerseits müssen für den Prüfvorgang zum Detektieren der von den optischen Beugungsstrukturen abgelenkten Strahlen mehrere Empfänger oder ein Schirm im Strahlengang positioniert und für die optische Abbildung des Dokuments wieder daraus entfernt werden. Die dafür notwendigen Positioniereinheiten unterliegen einem Verschleiß, senken damit die Lebensdauer der Apparatur und erzeugen höheren Wartungsaufwand. Außerdem wird für das Positionieren zusätzliche Zeit benötigt, die den Prüfvorgang verlängert.
Werden die Empfänger außerhalb des zur optischen Auslesung notwendigen Bereiches angeordnet, wird die Prüfanordnung aufgrund der langen Wege zwischen optischer Beugungsstruktur und Empfänger sehr empfindlich gegenüber Abweichungen in der Position der optischen Beugungsstruktur oder die Empfänger müssen sehr groß ausgeführt werden, was die Empfindlichkeit gegen Streustrahlung und unerwünschte Reflexe vergrößert.

Der Erfindung liegt die Aufgabe zugrunde, eine neue Möglichkeit zum Prüfen von optischen Beugungsstrukturen auf Dokumenten zu finden, die mit geringem gerätetechnischem Aufwand in kürzester Zeit das Vorhandensein und die Echtheit von optischen Beugungsstrukturen nachzuweisen gestattet. Eine erweiterte Aufgabe besteht darin, mit derselben Prüfeinrichtung ohne Bewegung von mechanischen Teilen oder des geprüften Dokuments eine optische Auslesung von Schrift- und/oder Bilddaten zu ermöglichen.

Erfindungsgemäß wird die Aufgabe bei einer Anordnung zum Prüfen von optischen Beugungsstrukturen auf Dokumenten, bei der eine Beleuchtungseinheit zum Beleuchten mindestens der Beugungsstruktur des Dokuments und eine Sensoreinheit zum Detektieren von unter definierten Winkeln gebeugten Lichtanteilen über einer Auflagefläche des Dokumentes angeordnet sind, dadurch gelöst, dass die Sensoreinheit orthogonal über der Auflagefläche des Dokuments angeordnet ist, dass die Beleuchtungseinheit mindestens zwei monochromatische Lichtquellen enthält, die zur Aussendung von Lichtbündeln unter definierten Einfallswinkeln bezüglich einer auf der Beugungsstruktur errichteten Flächennormale des Dokuments angebracht und sequenziell einschaltbar sind, wobei mindestens eine Lichtquelle einen Einfallswinkel aufweist, der in Richtung und Betrag mit einem Beugungswinkel übereinstimmt, unter dem ein Intensitätsmaximum des strukturspezifisch erzeugten Beugungsmusters entsteht, falls die Beugungsstruktur aus Richtung der Sensoreinheit beleuchtet würde, und dass die Sensoreinheit mit der Beleuchtungseinheit synchronisiert ist, um den eingeschalteten Lichtquellen zugeordnete Beugungssignale zu erfassen.

Vorteilhaft sind die Lichtquellen der Beleuchtungseinheit unter verschiedenen Einfallswinkeln (im Halbraum über der Auflagefläche des Dokuments) angeordnet, bei denen Betrag und Richtung mit jeweils einem unterschiedlichen Beugungswinkel der Beugungsstruktur übereinstimmen.
Vorzugsweise weist die Beleuchtungseinheit mindestens eine weitere Lichtquelle (die auch eine von nur zwei Lichtquellen sein kann) auf, bei der Richtung und Betrag des Einfallswinkels keinem definierten Beugungswinkel der Beugungsstruktur zugeordnet ist (Negativtest der Beugungsstruktur).

Die Beleuchtungseinheit enthält zweckmäßig flächige Lichtquellen, um die Prüfung des Dokumentes unempfindlicher gegenüber unterschiedlicher Lage der zu prüfenden Beugungsstruktur zu machen. Dazu sind in der Beleuchtungseinheit vorteilhaft Lichtquellen mit aufgeweitetem parallelem Lichtbündel zur Beleuchtung der gesamten Beugungsstruktur unter definierten Winkeln vorhanden. Es können aber auch zweckmäßig Gruppen von eng benachbarten Lichtquellen zur großflächigen Beleuchtung der gesamten Beugungsstruktur unter definierten Winkeln in der Beleuchtungseinheit vorhanden sein.
Die Beleuchtungseinheit weist vorteilhaft mindestens ein zweidimensionales Lichtquellenarray auf, wobei die Lichtquellen des Lichtquellenarray einzeln oder in Gruppen ansteuerbar sind. Vorzugsweise besteht das Lichtquellenarray aus Leuchtdioden (LED).
Zur Vervielfachung der Lichtquellenorte kann die Beleuchtungseinheit aber auch mindestens eine Mikroprismenfolie enthalten.

Es ist ferner vorteilhaft, wenn die Beleuchtungseinheit zur Parallelisierung der Beleuchtung wenigstens eine Mikrolinsenfolie oder Fresnellinsen aufweist.
Zweckmäßig enthält die Beleuchtungseinheit mehrere zweidimensionale Lichtquellenarrays, die parallel zu den Kanten des zu prüfenden Dokuments geneigt angeordnet und deren Lichtquellen einzeln einschaltbar sind. Dabei haben mindestens zwei gegenüberliegende Lichtquellenarrays vorzugsweise dieselbe Größe und Neigung.

In einer besonders vorteilhaften Ausführung der Erfindung weist die Sensoreinheit einen Bildsensor auf, der aufeinanderfolgend zur Aufnahme einer optischen Abbildung des Dokuments und zur Aufnahme eines von der Beugungsstruktur gebeugten Lichtbündels vorgesehen ist, und die Beleuchtungseinheit enthält zusätzliche Lichtquellen zur Erzeugung einer für die Bildaufnahme der optische Abbildung geeigneten Beleuchtung, die zweckmäßig Weiß-, UV- und/oder IR-Lichtquellen aufweist.
Bei dieser Gestaltung der Erfindung ist die Beugungsstruktur, wenn ihre Position aus der optischen Abbildung des gesamten Dokuments ermittelt wurde, vorteilhaft an jeder beliebigen Position bezüglich des Bildsensors auf Echtheit überprüfbar, wobei geeignete Lichtquellen oder Lichtquellengruppen ansteuerbar sind, bei denen an der Beugungsstruktur gebeugte Lichtbündel den Bildsensor definiert treffen oder - im Negativtest - nicht treffen.
In einer besonders ausgestalteten Variante ist der Bildsensor zur zusätzlichen Bildaufnahme von Beugungsmustern für visuelle Bewertung eingerichtet, wobei spezielle Lichtquellengruppen der Beleuchtungseinheit für die Bewertung von visuellen Beugungsmustern unter definierten Winkeln auf das visuelle Beugungsmuster gerichtet sind und als Bild aufgenommen werden.

Des Weiteren wird die Aufgabe der Erfindung bei einem Verfahren zum Prüfen von optischen Beugungsstrukturen auf Dokumenten, bei dem von einer Beugungsstruktur unter definierten Winkeln gebeugte Lichtanteile von einer Sensoreinheit oberhalb einer Auflagefläche des Dokumentes detektiert werden, durch folgende Schrittfolge gelöst:
- Ausrichten von mindestens zwei monochromatischen Lichtquellen auf die Beugungsstruktur unter definierten Einfallswinkeln bezüglich der Flächennormalen der Beugungsstruktur und der Sensoreinheit, wobei mindestens eine Lichtquelle die Beugungsstruktur unter einem Einfallswinkel beleuchtet, der in Richtung und Betrag mit einem Beugungswinkel der Beugungsstruktur übereinstimmt, unter dem ein Intensitätsmaximum eines strukturspezifisch erzeugten Beugungsmusters entsteht, falls die Beugungsstruktur aus Richtung der Sensoreinheit beleuchtet würde, und
- Einschalten der unterschiedlichen Lichtquellen mit verschiedenen Einfallswinkeln,
- Auslesen der Sensoreinheit synchron zu den unterschiedlich positionierten Lichtquellen, um den eingeschalteten Lichtquellen zugeordnete Beugungssignale in der Normalenrichtung der Beugungsstruktur zu erfassen.

Vorteilhaft wird die Beugungsstruktur bezüglich der Flächennormalen mit mindestens zwei Lichtquellen unter definierten Einfallswinkeln beleuchtet, die jeweils in Richtung und Betrag mit einem der unterschiedlichen Beugungswinkel des Beugungsmusters der Beugungsstruktur übereinstimmen, falls die Beugungsstruktur aus Richtung der Sensoreinheit beleuchtet würde.

Es erweist sich als besonders vorteilhaft, wenn die Beugungsstruktur beleuchtet wird von mindestens einer geeigneten Lichtquelle bezüglich der Flächennormale der Beugungsstruktur unter einem Einfallswinkel, der in Richtung und Betrag mit einem Beugungswinkel eines Intensitätsmaximums des spezifischen Beugungsmusters der Beugungsstruktur übereinstimmt, falls die Beugungsstruktur aus Richtung der Sensoreinheit beleuchtet würde, und mindestens einer weiteren Lichtquelle unter einem anderen Einfallswinkel, der nicht mit einem Beugungswinkel der Beugungsstruktur übereinstimmt.

Zweckmäßig kann die Beugungsstruktur aber auch mit mindestens zwei geeigneten Lichtquellen unter verschiedenen Einfallswinkeln, die jeweils mit einem auftretenden Beugungswinkel der Beugungsstruktur übereinstimmen, gleichzeitig beleuchtet werden, wobei die Sensoreinheit in diesem Fall ein Summensignal der Intensitäten der von der Beugungsstruktur gebeugten Lichtbündel aufnimmt.

Es erweist sich von Vorteil, wenn zusätzlich zu den von der Beugungsstruktur durch die Sensoreinheit detektierten Beugungssignalen vorher eine optische Abbildung des Dokuments mittels eines Bildsensors zur Erfassung von Bilddaten und Textinformation aufgenommen wird, um insbesondere bei Prüfung von verschiedenen Dokumentenarten (z.B. Personaldokumente verschiedener Staaten, unterschiedliche ID-Karten etc.) zunächst zu klären, welches Beugungsmuster geprüft werden soll.
Vorzugsweise werden dabei auch die von der Beugungsstruktur erzeugten Beugungssignale mittels des Bildsensors aufgenommen.

Zur Beleuchtung von unterschiedlichen Beugungsstrukturen verschiedener Dokumentenarten werden in der Beleuchtungseinheit vorteilhaft Lichtquellen in regelmäßig geordneten Lichtquellenarrays angeordnet, für die jeweilige Beugungsstruktur geeignet ausgewählt und entsprechend eingeschaltet.
Dabei werden aus der Bildinformation die Art und Lage der Beugungsstruktur bezüglich der Normalenrichtung des Bildsensors ermittelt und geeignete Lichtquellen der Lichtquellenarrays, für die der Einfallswinkel der Lichtquelle und der Austrittswinkel des von einer bekannten Beugungsstruktur gebeugten Lichtbündels zusammengenommen jeweils zu einem definierten Beugungssignal auf dem Bildsensor führen, vorzugsweise seriell eingeschaltet. Sie können aber auch als Gruppen von Lichtquellen mit unterschiedlichen Einfallswinkeln bezüglich der Beugungsstruktur gleichzeitig eingeschaltet werden, um ein Summensignal von Intensitäten von unterschiedlichen an der Beugungsstruktur gebeugten Lichtbündeln zu erfassen, so dass in kürzerer Messzeit ein Prüfergebnis (Positivtest der Beugungsstruktur) vorliegt.

Wenn Lage und Art der Beugungsstruktur bekannt sind, sich die Sensoreinheit aber nicht genau senkrecht über der zu prüfenden optischen Beugungsstruktur befindet, ergibt sich dennoch für jede Lage der Beugungsstruktur eine feste Beziehung zwischen dem Winkel, den die Senkrechte auf dem Dokument und das Lichtbündel von der optischen Beugungsstruktur zur Sensoreinheit einschließt und dem Winkel, den das Lichtbündel der Lichtquelle zur optischen Beugungsstruktur mit der Normalenrichtung der Auflagefläche des Dokuments einschließt. Anhand dieser Beziehung kann immer eine eindeutige Zuordnung erfolgen zwischen der Position der Sensoreinheit und der Position der Lichtquellen, deren an der Beugungsstruktur abgelenkte Lichtstrahlen auf die Sensoreinheit treffen. Dabei wird ausgenutzt, dass bei optischen Beugungsstrukturen im Gegensatz zu spiegelnden Flächen der Einfallswinkel eines auftreffenden Lichtstahles immer ungleich dem Austrittswinkel ist.
Vorteilhaft werden nach dem Einschalten geeigneter Lichtquellen zur Erfassung eines Beugungssignals auf der Sensoreinheit weitere Lichtquellen der Lichtquellenarrays eingeschaltet, für die der Einfallswinkel der Lichtquelle und der Austrittswinkel des gebeugten Lichtbündels zusammengenommen bei einer bekannten Beugungsstruktur kein Beugungssignal auf dem Bildsensor erzeugen dürfen (Negativtest der Beugungsstruktur).

Zur Erhöhung der Unempfindlichkeit der Prüfung gegenüber geringfügigen Verschiebungen der Beugungsstruktur werden zweckmäßig Gruppen von benachbarten Lichtquellen mit im wesentlichen gleichem Einfallswinkel zur vollständigen Ausleuchtung der Beugungsstruktur gleichzeitig eingeschaltet.

Um geeignete Lichtquellen für die Prüfung der Beugungsstruktur eines neuen Dokumententyps zu bestimmen, werden die geeigneten Lichtquellen zweckmäßig durch Vorlegen eines autorisierten Musterdokuments mit verschieden positionierter Beugungsstruktur eingelernt, indem die Positionen der Lichtquellen, bei denen gebeugte Lichtbündel ein hinreichend großes (vorzugsweise maximales) Beugungssignal auf dem Bildsensor ergeben, ausgewählt und gespeichert werden.
Es erweist sich für die Prüfung der Beugungsstruktur eines neuen Dokumententyps weiterhin als vorteilhaft, zusätzlich zum Einlernen geeigneter Lichtquellen weitere Lichtquellen, bei denen kein Beugungssignal auf dem Bildsensor erzeugt wird, durch Vorlegen des autorisierten Musterdokuments mit verschieden positionierter Beugungsstruktur einzulernen, indem Positionen der weiteren Lichtquellen ausgewählt und gespeichert werden, die vorzugsweise möglichst in der Nähe der für die Beugungslichtaufnahme geeigneten Lichtquellen liegen.
Für beide obigen angelernten Positionen von Lichtquellen (für Positiv- und/oder Negativtest) ist es vorteilhaft, dass zum Ausgleich von kleinen Lageabweichungen der Beugungsstruktur auch Positionen von Lichtquellen eingelernt und gespeichert werden, bei denen an der Beugungsstruktur gebeugtes Licht auf dem Bildsensor ein (noch) hinreichend unterscheidungskräftiges (über einem definierten Schwellwert liegendes) Beugungssignal ergibt.

Mit der Erfindung ist es möglich, optische Beugungsstrukturen auf Dokumenten zu prüfen, wobei mit geringem gerätetechnischem Aufwand in kürzester Zeit das Vorhandensein und die Echtheit der optischen Beugungsstrukturen nachgewiesen werden können.
Dieselbe Prüfeinrichtung gestattet es, ohne Bewegung von mechanischen Teilen oder des geprüften Dokuments mittels einer optischen Abbildung Schrift- und/oder Bilddaten des Dokuments zu erfassen. Dabei kommt die erfindungsgemäße Anordnung ohne eine Laserquelle aus und benötigt somit keine besonderen Maßnahmen für die Strahlungssicherheit des Prüfgerätes. Zum Erkennen und Prüfen der optischen Beugungsstrukturen werden Punktlichtquellen oder Lichtquellen mit definierter Ausdehnung angeordnet, die unter definierten Winkeln zur Normalenrichtung auf die optische Beugungsstruktur einstrahlen. Der Einsatz von Lichtquellen mit einem Lichtbündel, dessen Durchmesser etwas größer als die optische Beugungsstruktur ist, macht die Anordnung unempfindlich gegen Verschiebung oder Drehungen des Dokuments.
Bei Verwendung von Lichtquellenarrays (z.B. LED-Matrizen) zusammen mit einem Bildsensor finden sich stets LED, deren Bündel von der Beugungsstruktur so abgelenkt werden, dass sie vom Bildsensor empfangen werden. Folglich werden keine gesonderten Empfänger für Bildaufnahme und Prüfung der Beugungsstruktur eines Dokuments benötigt. In Abhängigkeit von der Dokumentenart und der somit unterschiedlichen Beugungsstruktur können die zur Prüfung erforderlichen Lichtquellen in einem Anlernprozess mit autorisierten Musterdokumenten einfach ermittelt und gespeichert werden.

Die Erfindung soll nachstehend anhand von Ausführungsbeispielen näher erläutert werden. Die Zeichnungen zeigen:
- Fig. 1:: eine Prinzipdarstellung einer erfindungsgemäßen Anordnung zur Prüfung der optischen Beugungsstruktur (Kinegramm) mit einem Sensor in der Normalenrichtung über der Beugungsstruktur sowie mit Lichtquellen in Positionen, die denen des Intensitätsmusters bei kohärenter Beleuchtung in Normalenrichtung entsprechen,
- Fig. 2:: eine Darstellung zur Erläuterung der Auswertung des Beugungsmusters gemäß dem Stand der Technik mit einer Laserquelle, deren Strahl durch die Öffnung eines Schirmes orthogonal auf eine Beugungsstruktur fällt und auf dem Schirm ein Beugungsintensitätsmuster erzeugt,
- Fig. 3:: eine Darstellung des Standes der Technik mit Laserbeleuchtung in Normalenrichtung und einer Vielzahl von Empfängern an den Stellen der Maxima des Beugungsmusters,
- Fig. 4:: eine zu Fig. 1 modifizierte erfindungsgemäße Anordnung mit einem optischen Abbildungssystem, das das Dokument auf einen Bildsensor abbildet,
- Fig. 5:: eine weitere Ausgestaltung der Anordnung von Fig. 4, bei der die Lichtquellen als Flächenstrahler zum Erzeugen von quasiparallelen Lichtbündeln ausgebildet sind,
- Fig. 6:: eine schematische Darstellung einer weiteren Gestaltung der Erfindung mit flächenhaft ausgebildeten Lichtquellenarrays und einem Bildsensor, mit der optische Beugungsstrukturen an beliebiger Stelle des gesamten Dokuments geprüft werden können,
- Fig. 7:: eine Draufsicht der Gestaltungsform von Fig. 6 mit zusätzlichen Lichtquellen-Arrays für eine Weißlichtbeleuchtung zur Bildaufnahme,
- Fig.8:: ein Prinzipschema des erfindungsgemäßen Verfahrens zur Echtheitsprüfung eines Dokuments auf Basis einer maschinellen Prüfung der Beugungsstruktur (bekanntes Kinegramm),
- Fig. 9:: ein Ablaufschema des Prüfverfahrens für eine Dokumentenprüfung mit Erfassung von Text- und Bildinformation, insbesondere zur Erkennung des Vorhandenseins und der Lage der Beugungsstruktur, d.h. des Dokumententyps als sinnvolle Voraussetzung zur Prüfung der Beugungsstruktur (Kinegramm)
- Fig. 10:: einen möglichen Ablauf für das Anlernen eines neuen Dokumententyps mit Beugungsstruktur.

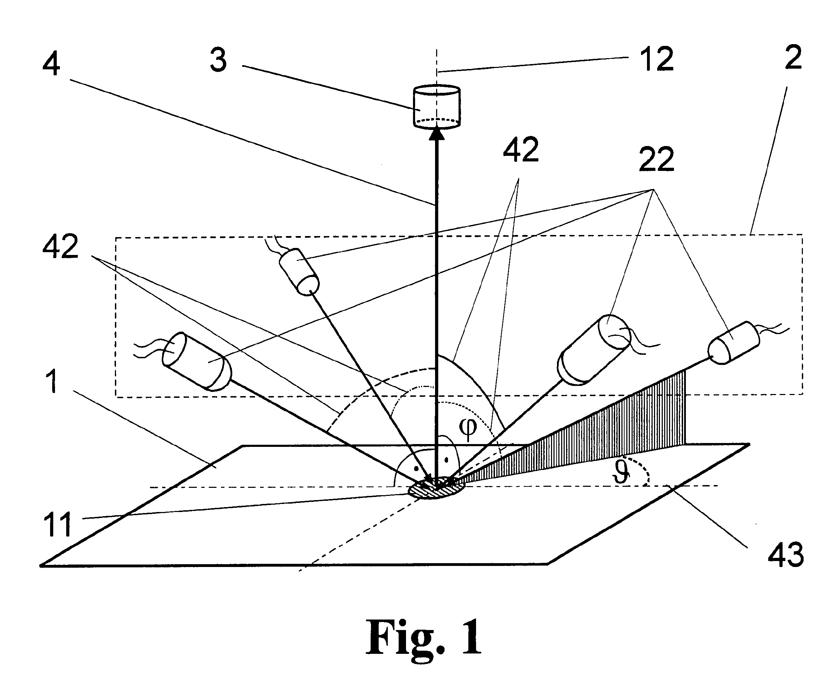

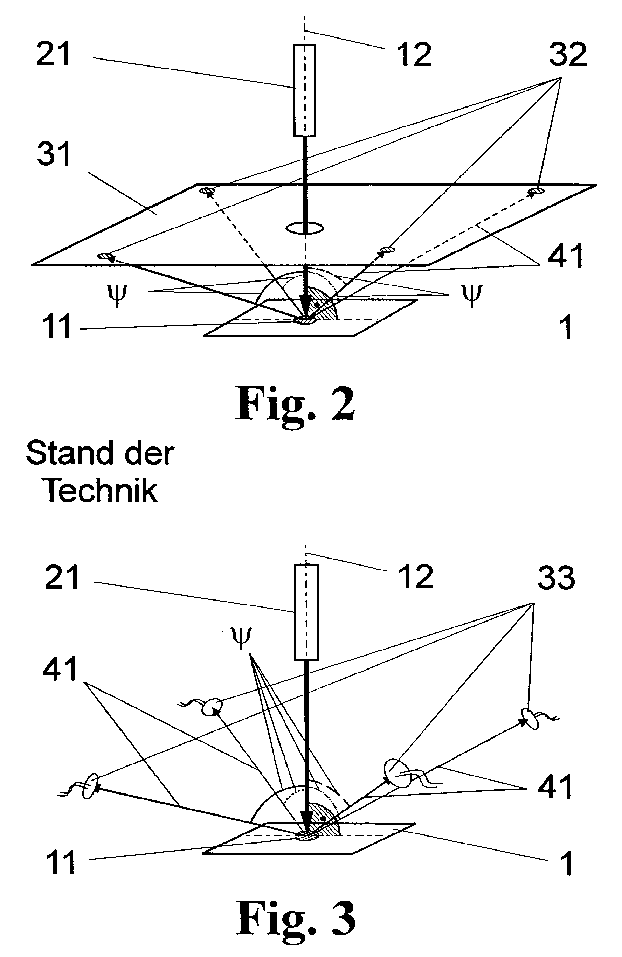

Der Grundaufbau der Erfindung - wie in der Anordnung gemäß Fig. 1 dargestellt - besteht aus einer Auflagefläche (nicht separat dargestellt) für das Dokument 1, das als zu prüfendes Sicherheitsmerkmal eine optische Beugungsstruktur 11 (z.B. ein so genanntes Kinegramm) aufweist, eine Beleuchtungseinheit 2 mit mehreren Lichtquellen 22, die unter definierten Einfallswinkeln 42 zur Flächennormale 12 der Beugungsstruktur 11 Lichtbündel auf die Beugungsstruktur 11 richten, sowie eine Sensoreinheit 3, über der Beugungsstruktur 11 angeordnet ist. Die Einfallswinkel 42 sind im allgemeinen Winkel im Halbraum oberhalb des Dokuments 1, d.h. sie haben eine Komponente zur Flächennormale 12 und eine Komponente innerhalb der Dokumentenebene bezüglich einer Parallelachse 43 zu einer der Außenkanten des Dokuments 1.
Die unterschiedlichen Einfallswinkel 42 der Lichtquellen 22 sind entsprechend der spezifischen Beugungsstruktur 11 des Dokuments 1 so gewählt, dass die gebeugten Lichtbündel 4 sämtlich auf die Sensoreinheit 3 fallen und in der Konfiguration von Fig. 1 entlang der Flächennormale 12 verlaufen. Das wird dadurch erreicht, dass die Einfallswinkel 42 der Lichtquellen 22 in Betrag und Richtung mit den Winkeln übereinstimmen, die als Austrittswinkel der gebeugten Lichtbündel 41 (siehe Fig. 2 und 3) entstehen würden, falls auf die Beugungsstruktur 11 mit Laserbeleuchtung (gemäß dem Stand der Technik) aus Richtung der Flächennormalen 12 eingestrahlt würde.

Fig. 2 zeigt ein bekanntes Verfahren des Standes der Technik mit einem Laser 21, dessen Strahl durch eine Öffnung des Schirmes 31 orthogonal auf eine optische Beugungsstruktur 11 auf dem Dokument 1 trifft. Die optische Beugungsstruktur 11 erzeugt - in dem hier gezeigten Beispiel - die vier abgelenkten Strahlen 41, die unter bestimmten von den Eigenschaften der optischen Beugungsstruktur 11 abhängigen Winkeln und Intensitäten bei ihrem Auftreffen auf den Schirm 31 jeweils Beugungsmuster 32 von Intensitätsmaxima gebeugten Lichts 41 erzeugen.
Die Verteilung des Beugungsmusters 32 auf dem Schirm 31 in bezug auf den auftreffenden Strahl des Lasers 21 hängt nur vom Abstand des Schirmes 31 zum Dokument 1 und von den Eigenschaften der optischen Beugungsstruktur 11 ab, wenn die Ebenen des Dokumentes 1 und des Schirmes 31 parallel liegen. Dadurch ist schon vor der Prüfung bekannt, wo das gebeugte Licht 41 auf den Schirm 31 treffen muss. Es kann also anhand der Position und Intensitäten des Beugungsmusters 32 auf dem Schirm 31 eine Aussage über die Echtheit/Gültigkeit der optischen Beugungsstruktur 11 gemacht werden.
Mit dieser Anordnung des Standes der Technik lässt sich visuell oder mittels eines Bildaufnahmesystems überprüfen, ob das Beugungsmuster 32 an den richtigen Stellen des Schirms 31 erscheint und somit das kontrollierte Dokument gültig (nicht gefälscht) ist. Für eine automatisierte Überprüfung der Gültigkeit des Dokuments ist also eine gesonderte Bildauswertung erforderlich, weil das Dokument 1 zur Aufnahme Text- und Bildinformationen - wegen des Schirmes 31 - nicht optisch abgebildet und analysiert werden kann, oder der Schirm 31 muss mechanisch bewegt werden, um ihn für die Bildaufnahme zeitweilig zu entfernen.

In Fig. 3 ist eine Methode gemäß dem Stand der Technik dargestellt, bei der der Schirm 31 durch mehrere dem Beugungsmuster 32 (bzw. ausgewählten Intensitätsmaxima desselben) zugeordnete Empfänger 33 ersetzt. Damit wird das Dokument 1 nicht mehr von einem Schirm verdeckt und kann neben der Überprüfung der Beugungsstruktur 11 gleichzeitig optisch ausgelesen werden.
Bei einer solchen Anordnung müssen die Beugungsstruktur 11 und die Empfänger 33 an vorher genau bestimmten Stellen positioniert werden, d.h. es können nur Dokumente 1 eines Typs, die stets dieselbe Beugungsstruktur 11 an derselben Stelle aufweisen, überprüft werden. Außerdem können die Dokumente nur dann automatisch geprüft werden, wenn deren Beugungsstruktur 11 sich immer an der gleichen Stelle unter dem Laser 21 befindet, da die Anordnung sehr empfindlich auf Verschiebung oder Verdrehung des Dokumentes 1 reagiert.

Zieht man nun den Vergleich zu Fig. 1 wird der Aufbau und die Wirkungsweise des erfindungsgemäßen Verfahrens zur Prüfung der Beugungsstruktur 11 deutlicher klar. An den Positionen der Empfänger 33 von Fig. 2 sind jeweils einzelne Lichtquellen 22 der Beleuchtungseinheit 2 angebracht, deren Strahlen auf die Beugungsstruktur 11 treffen und dort in Richtung der Flächennormale 12 des Dokuments 1 (die der Richtung des einfallenden Laserstrahls in Fig. 2 und 3 entspricht) abgelenkt werden. Anstatt des Lasers 21 wird eine Sensoreinheit 3 positioniert, die im Minimalfall nur einen Einzelempfänger, der das auftreffende Licht detektiert, aufweist. Dabei kann die Prüfung je nach Eigenschaften der Beugungsstruktur 11 durch Auswertung des Summensignals von allen vier Lichtquellen 22 oder durch serielles Einschalten der Lichtquellen 22 und Überprüfung der Einzelsignale erfolgen.
Durch zusätzliches Anbringen weiterer Lichtquellen (in Fig. 1 nicht eingezeichnet) in Positionen, die bei Bestrahlung der Beugungsstruktur 11 kein gebeugtes Licht 4 auf die Empfängereinheit 3 lenken, kann die Sicherheit der Überprüfung der Echtheit der Beugungsstruktur 11 (als so genannter Negativtest) erhöht werden. Gefälschte Dokumente, die an der Stelle der optischen Beugungsstruktur 11 ein anderes Material oder andere Struktur besitzen, die bei Beleuchtung mit den Lichtquellen 22 zufällig ebenfalls Reflexe erzeugen, können damit herausgefunden werden. Diese Maßnahme ist deshalb wichtig oder nahezu notwenig, da für eine schnelle automatisierte Prüfung von Dokumenten 1 - im Gegensatz zu Fig. 2 - nicht mehr das komplette Beugungsmuster 32 geprüft wird, sondern nur ausgewählte Intensitätsmaxima (wie es übrigens auch bereits im Stand der Technik gemäß Fig. 3 der Fall war) detektiert werden.

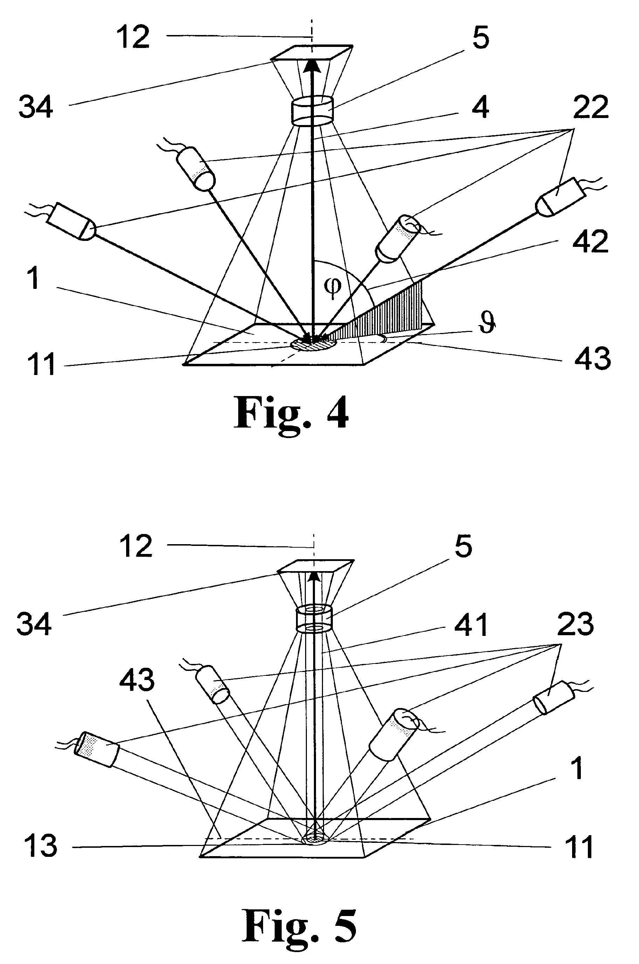

Die Fig. 4 zeigt den gleichen Grundaufbau wie Fig. 1, ergänzt durch eine Abbildungsoptik 5, welches das Dokument 1 auf einen Bildsensor 34 abbildet. Die Abbildungsoptik 5 ermöglicht einerseits das optische Erfassen und Auslesen des gesamten Dokumentes 1, einschließlich Bild- und Textinformation, und ermöglicht deshalb auch das Ermitteln des Dokumententyps und der Art und Lage der Beugungsstruktur 11. Mit der Kenntnis der Lage des Dokumentes 1 und der optischen Beugungsstruktur 11 kann dann kontrolliert werden, ob auf den Bildsensor 34 abgelenktes Licht 4 an der richtigen Stelle (d.h. von der Beugungsstruktur 11) abgelenkt wurde und nicht etwa durch Reflexionen auf anderen Oberflächenteilen des Dokuments 1 entstanden sind.
Diese Ausführung der Erfindung ermöglicht mit nur einem Empfänger, dem Bildsensor 34, ein gleichzeitiges optisches Erfassen von Dokumentendaten (Bild- und Textdaten) und eine Überprüfung der optischen Beugungsstruktur 11, wie unter Fig. 1 beschrieben.

Die Fig. 5 zeigt eine gegenüber Fig. 4 modifizierte Anordnung, bei der Lichtquellen 23 als Flächenstrahler, z.B. als LED-Array oder Punktlichtquelle mit Optik, zum Erzeugen eines quasiparallelen Lichtbündels ausgebildet sind. Mit den Lichtbündeln der Lichtquellen 23 wird die Fläche 13 auf dem Dokument 1 beleuchtet. Die Fläche 13 ist größer als die Fläche der optischen Beugungsstruktur 11. Diese Anordnung ist deutlich unempfindlicher gegen Verschiebung oder Drehung der optischen Beugungsstruktur 11 aus der zur Prüfung erforderlichen Lage heraus.

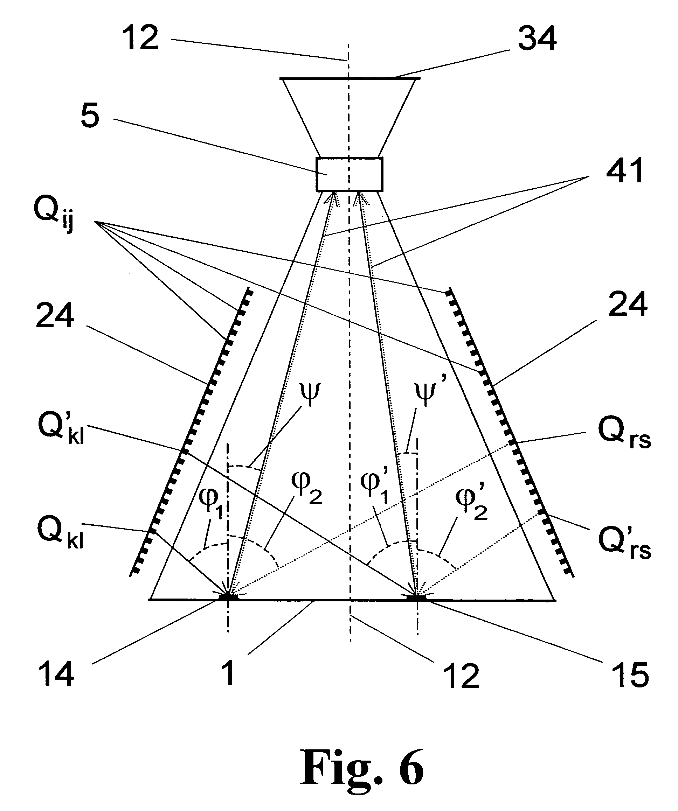

Die Fig. 6 zeigt schematisch eine Anordnung, die es ermöglicht, optische Beugungsstrukturen 11 an beliebiger Stelle des Dokuments 1 zu prüfen. Dazu sind seitlich außerhalb des Abbildungsstrahlengangs vom Dokument 1 über die Abbildungsoptik 5 auf den Bildsensor 34 flächenhaft ausgebildete Lichtquellen-Arrays, z.B. LED-Arrays, 24 angeordnet. Die einzelnen Lichtquellen Qᵢⱼ, die auf den Arrays 24 in Zeilen und Spalten oder anderen für eine hohe Packungsdichte günstigen Mustern angeordnet sind, können einzeln oder in beliebig wählbaren Gruppen eingeschaltet werden. Dabei ist es aufgrund des flächigen Charakters der Lichtquellen-Arrays 24 - obwohl diese nur auf zwei gegenüberliegenden Seiten des Dokuments angeordnet sind - möglich, Einfallswinkel 42 (gemäß Fig. 1) im Raum zu realisieren, die durch einer Komponente bezüglich der Flächennormale 12 und einer zweiten Komponente bezüglich einer Parallelachse 43 zur Außenkante des Dokuments 1, definiert sind. Aus Gründen der Übersichtlichkeit werden in der Fig. 6 nur in der Zeichenebene liegende Einfallswinkel ϕ behandelt. Andere Einfallswinkel 42 sind dann durch Drehung der Zeichenebene um eine Winkel komponente ϑ (in Fig. 6 nicht dargestellt) um den Mittelpunkt der betrachteten Beugungsstruktur 11 (bzw. nachfolgend erste und zweite Positionen von Beugungsstrukturen 14 und 15) in analoger Weise realisierbar.

Nimmt man beim Array 24 an, dass die Einzellichtquellen Q in Zeilen und Spalten geordnet sind und k und l als Zeilen- bzw. die Spaltennummern die Position einer Einzellichtquelle Qₖₗ kennzeichnen, so wird das Lichtbündel der Einzellichtquelle Qₖₗ (oder einer Gruppe von dicht benachbarten Einzellichtquellen um die Einzellichtquelle Qₖₗ) unter einem definierten Einfallswinkel ϕ₁ auf eine erste Beugungsstruktur 14 eingestrahlt und erzeugt dort unter einem Winkel ψ ein gebeugtes Lichtbündel 41, das über die Abbildungsoptik 5 auf dem Bildsensor 34 übertragen wird.

Gleichermaßen gibt es auf dem gegenüberliegenden Lichtquellenarray 24 eine Einzellichtquelle Qᵣₛ (oder eine Gruppe von dicht zu Qᵣₛ benachbarten Einzellichtquellen), deren emittierte Strahlung unter dem Einfallswinkel ϕ₂ auf die erste Beugungsstruktur 14 trifft und dort analog unter dem Winkel ψ abgelenkt wird. Die Prüfung kann aus mehr als zwei Richtungen erfolgen, wenn diese in der ersten Beugungsstruktur 14 codiert sind und eine oben erwähnte Winkelkomponente ϑ berücksichtigt wird.

Ist eine zweite Beugungsstruktur 15 auf dem Dokument 1 vorhanden oder die erste Beugungsstruktur 14 hat durch VerschiebungNerdrehung des Dokuments 1 eine andere Lage erhalten (und wird deshalb als zweite Beugungsstruktur aufgefasst), so ist mit der dargestellten Anordnung die Prüfung der Beugungsstruktur 15 möglich, ohne dass das Dokument 1 neu positioniert werden muss.
Dabei wird das Lichtbündel der Einzellichtquelle Q'ₖₗ (oder einer Gruppe von dicht benachbarten Einzellichtquellen um die Einzellichtquelle Q'ₖₗ) unter einem definierten Einfallswinkel ϕ₁' auf die zweite Beugungsstruktur 15 eingestrahlt und erzeugt dort unter einem Winkel ψ' ein gebeugtes Lichtbündel 41, das über die Abbildungsoptik 5 auf dem Bildsensor 34 abgebildet wird.
Gleichermaßen existiert auf dem gegenüberliegenden Lichtquellenarray 24 eine Einzellichtquelle Q'ᵣₛ (oder eine Gruppe von dicht zu Q'ᵣₛ benachbarten Einzellichtquellen Q), deren emittierte Strahlung unter dem Einfallswinkel ϕ₂' auf die Beugungsstruktur 15 trifft und dort analog unter dem Winkel ψ' abgelenkt wird. Die Prüfung kann wiederum aus mehreren Richtungen erfolgen, falls diese in der zweiten Beugungsstruktur 15 codiert sind.
Alle Einzellichtquellen Qᵢⱼ oder Q'ᵢⱼ (oder deren dicht benachbarte Gruppen), die auf die erste oder zweite Beugungsstruktur 14 bzw. 15 aus Richtungen einstrahlen, für die die jeweilige Beugungsstruktur 14 bzw. 15 nicht codiert ist, erzeugen abgelenkte Lichtbündel unter Winkeln, die ungleich ψ bzw. ψ' sind und treffen somit die Abbildungsoptik 5 nicht, so dass solche abgelenkten Lichtbündel (nicht eingezeichnet) auch nicht auf den Bildsensor 34 gelangen.
Diese Anordnung ermöglicht eine Prüfung von Beugungsstrukturen 15 (bzw. 11) nicht in der Normposition 14 auf dem Dokument 1, sondern es ist auch möglich, Lageabweichungen des Dokumentes 1, wie Verschiebung oder Drehung in der Dokumentenebene, und damit Lageabweichungen der Beugungsstruktur 15 mittels der Abbildung des Dokumentes 1 und deren Auswertung zu erkennen und definierte Einzellichtquellen Qᵢⱼ' so einzuschalten, dass eine Überprüfung der beliebig gelegenen Beugungsstruktur 15 auch dann möglich ist.
Ein weiterer Vorteil dieser Anordnung besteht in der Möglichkeit, optische Strukturen und Hologramme zu prüfen, die unter verschiedenen Beleuchtungswinkeln ein unterschiedliches Aussehen haben. Dazu können die Einzellichtquellen Qᵢⱼ, die das Dokument 1 unter den vorgegebenen Winkeln beleuchten, derart einzeln oder in Gruppen angesteuert werden, dass - aus Richtung des Bildsensors 34 gesehen - ein erwartetes Bild erscheint und vom Bildsensor 34 für die weitere Überprüfung mittels Bildverarbeitungssoftware erfasst werden kann.
In Abhängigkeit vom Beleuchtungswinkel wechselnde Figuren (z.B. von Hologrammen) können so durch sequentielles Schalten der Lichtquellen Q des LED-Arrays 24 bzw. 24' und Erzeugen einer synchronen Bildsequenz erfasst und auf ihre Echtheit überprüft werden.

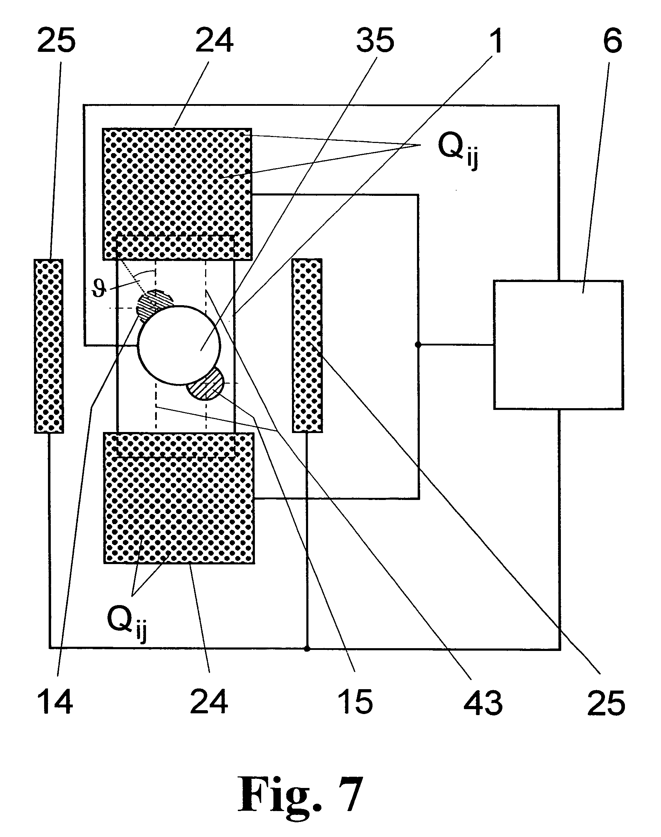

In Fig. 7 ist eine Anordnung zum optischen Auslesen eines Dokumentes 1 und zur Überprüfung einer als Sicherheitsmerkmal mit dem Dokument 1 fest verbundenen optischen Beugungsstruktur 11 dargestellt. Dabei dient die Kombination von Abbildungsoptik 5 und Bildsensor 34 als Bildaufnahmesystem 35 zusätzlich dem optischen Erfassen bzw. Auslesen des Inhaltes des Dokumentes 1.
Ohne eine Veränderung der Anordnung kann, beginnend mit dem Zeitpunkt der optischen Erfassung oder zu einem anderen geeigneten Zeitpunkt nach der Bildaufnahme und Bildauswertung, durch gleichzeitiges oder aufeinanderfolgendes Einschalten von geeigneten Lichtquellen 22 bzw. 23 (in bezug auf die Figuren 1, 4 oder 5) mit positionsgerecht festgelegten Einzellichtquellen Qᵢⱼ oder Qᵢⱼ' das Vorhandensein und die Echtheit einer optischen Beugungsstruktur 11 (Kinegramm) auf dem Dokument 1 überprüft werden.
Für die richtige Auswahl der Einzellichtquellen Qᵢⱼ bzw. Qᵢⱼ' sind Kenntnisse über die Eigenschaften der zu überprüfenden Beugungsstruktur 11 notwendig, da nur mit der Information, von welchen Winkeln (gemäß Fig. 1 Einfallwinkel 42 im Raum) die konkrete Beugungsstruktur 11 eines Dokumententyps beleuchtet werden muss, um die vom Bildaufnahmesystem 35 erhaltenen Beugungssignale als richtig interpretiert werden können. Dazu ist eine Steuer- und Auswerteeinheit 6 vorhanden, mit der die Auslesung des Bildaufnahmesystems 35 synchronisiert wird einerseits mit der Ansteuerung von Beleuchtungsarrays 25 für Bildaufnahme vom Dokument 1 (mindestens mit Weißlicht, zusätzlich auch mit UV- und/oder IR-Strahlung) und andererseits mit der Einschaltung der geeigneten Lichtquellen 22 bzw. 23 (wie zu Fig. 1, 4 bzw. 5 beschrieben) als Einzellichtquellen (oder Lichtquellengruppen) Qᵢⱼ oder Qᵢⱼ' der Lichtquellen-Arrays 24 oder 24'. Weiterhin sind Speichermittel im Sinne einer Datenbank in der Steuer- und Auswerteeinheit 6 vorhanden, die für unterschiedliche Dokumententypen (z.B. Personaldokumente verschiedener Staaten) Sätze von geeigneten Lichtquellen 22 oder 23 (bzw. Lichtquellengruppen) enthalten, wobei diese Datenbank durch Anlernen von Beugungsstrukturen 11 der verschiedenen Dokumententypen und/oder Beugungsstrukturen 14 oder 15 (siehe Fig. 6) in verschienene Lagen bezüglich des Bildaufnahmesystems 35 beliebig erweiterbar ist.

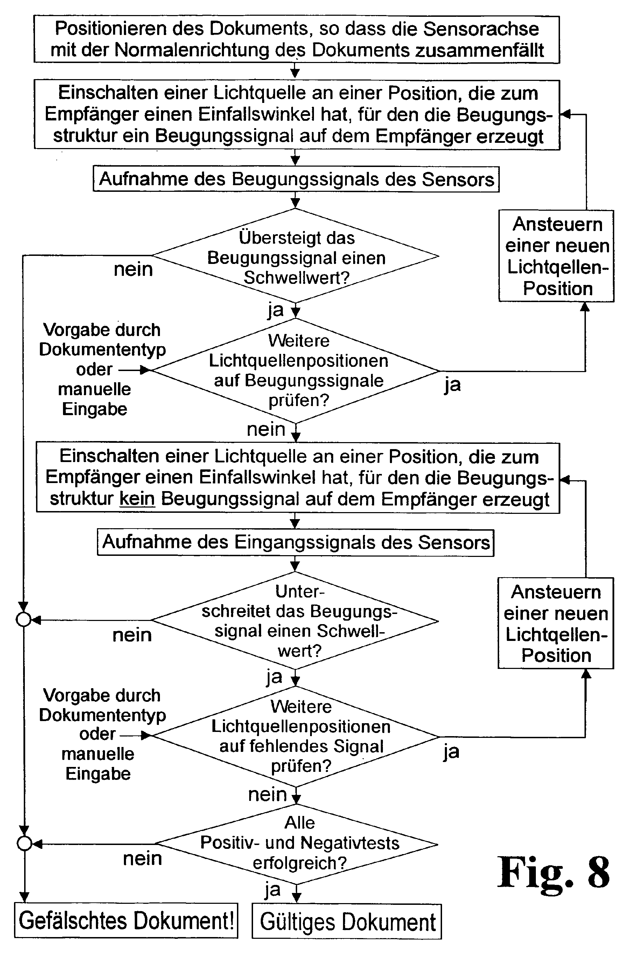

Mit Bezug auf die Ausgestaltungen der Erfindung gemäß Fig. 1, 4 oder 5 soll im Folgenden anhand von Fig. 8 ein Verfahren zur Prüfung der Beugungsstruktur 11 eines bekannten Dokumententyps erläutert werden.
Das zu prüfende Dokument 1 weist - ohne Beschränkung der Allgemeinheit von Dokumenten mit mehreren Beugungsstrukturen - eine optische Beugungsstruktur 11 auf.

In einem ersten Schritt wird sichergestellt, dass die Achse der Sensoreinheit 3 parallel zu einer Flächennormale 12 des Dokuments 1 ist. Falls - wie in Fig. 1 angenommen - ein Einzelsensor verwendet wird, der nur Beugungssignale von Beugungslicht 4 entlang der Flächennormalen 12 über der Beugungsstruktur 11 erfassen kann, ist zusätzlich dafür Sorge zu tragen, dass die Flächennormale 12 auf der Beugungsstruktur 11 mit der Sensorachse zusammenfällt.
Anschließend werden - wie dem Programmablauf von Fig. 8 weiter zu entnehmen ist - nacheinander Lichtquellen 22 (bzw. 23 gemäß Fig. 4) unter definierten Einfallswinkeln 42 [aufzufassen als zusammengesetzte Winkel im Raum mit zwei Komponenten (ϕ,ϑ)] auf die Beugungsstruktur 11 gerichtet, bei denen bei ordnungsgemäßer Beugungsstruktur 11 ein Beugungssignal in der Sensoreinheit 3 entstehen muss (Positivtest).

Das an der Beugungsstruktur 11 abgelenkte Beugungslicht 4 wird dann mittels der Sensoreinheit 3 (bzw. dem Bildsensor 34) aufgenommen. Übersteigt die Intensität des Beugungslichts 4 bei Ansteuerung einer geeigneten Lichtquelle 22 einen vorgegebenen Schwellwert nicht, ist die Beugungsstruktur 11 als ungültig einzustufen und das zugehörige Dokument gefälscht oder beschädigt.
Auf die Ansteuerung weiterer geeigneter Lichtquellen 22 (bzw. 23) und Auswertung der Intensitäten von Beugungslicht 4 kann verzichtet werden, wenn zur Absicherung im folgenden Schritt wenigstens noch eine weitere Lichtquelle eingeschaltet wird, die bei ordnungsgemäßer Beugungsstruktur 11 kein Beugungssignal in der Sensoreinheit 3 erzeugen darf (Negativtest).
Wird bei diesem Negativtest mit der zugehörigen Auslesung der Sensoreinheit 3 (bzw. des Bildsensors 34 in Fig. 4 und 5) ein vorgegebener unterer (niedriger) Schwellwert überschritten, ist das Dokument gefälscht.

Ergibt der oben beschriebene erste Positivtest unter Anwendung geeigneter Lichtquellen 22 (bzw. 23) ein hinreichend intensives Beugungssignal in der Sensoreinheit 3, kann auf zweierlei Wegen mit der Prüfung fortgefahren werden.
A) Es werden noch weitere geeignete (mindestens jedoch eine) geeignete Lichtquelle(n) 22 (oder 23) eingeschaltet, das zugehörige Beugungssignal aufgenommen und gegenüber dem vorgegebenen Schwellwert bewertet. Liegen dieser und gegebenenfalls weitere Positivtests oberhalb des Schwellwerts (für den Positivtest) ist die Beugungsstruktur 11 in Ordnung und das geprüfte Dokument 1 gültig. Zur weiteren Absicherung kann ein nachfolgender Negativtest, bei dem das Signal der Sensoreinheit 3 unterhalb einer vorgegebenen unteren Schwelle geblieben ist, endgültige Gewissheit schaffen.
B) Nach einem erfolgreichen Positivtest wird direkt zum Negativtest übergegangen und das bei eingeschalteter weiterer Lichtquelle für den Negativtest von der Sensoreinheit 3 empfangene Signal mit dem unteren Schwellwert verglichen. Wird der Schwellwert nicht überschritten, ist das geprüfte Dokument 1 gültig. Es können noch eine oder mehrere weitere Lichtquellen (für Negativtest) eingeschaltet werden, um das Ergebnis abzusichern.

In einer anderen Verfahrensweise kann der Positivtest mit mehreren geeigneten Lichtquellen 22 (oder 23) auch derart ausgeführt werden, dass alle geeigneten Lichtquellen 22 (oder 23) gleichzeitig angesteuert werden und ein Summensignal der Intensitäten aller Beugungssignale einer entsprechend erhöhten Schwellbewertung unterworfen werden. Diese Verfahrensweise setzt voraus, dass die Beugungsstruktur 11 eingestrahlte Lichtintensitäten in analog umgesetzte Beugungssignale wandelt. Wird durch das Summensignal die vorgegebene Schwelle überschritten, ist in der Regel keine weitere Negativprüfung mehr erforderlich. Der Negativtest dient dann nur noch der absoluten Zuverlässigkeit des positiven Ergebnisses. Ist das Summensignal allerdings unter dem Schwellwert geblieben und (z.B. durch Vergleich mit einer zweiten etwas niedrigen Schwelle) erkennbar, dass diese Unterscheitung nur geringfügig war, kann der nachgeordnete Negativtest - vorausgesetzt, dessen Schwellwert wird unterschritten - sofort zur Gültigerklärung des Dokuments 1 genutzt werden. Ist der Negativtest oberhalb des dafür bestimmten Schwellwerts, ist das Dokument gefälscht (oder beschädigt, d.h. ebenfalls ungültig).

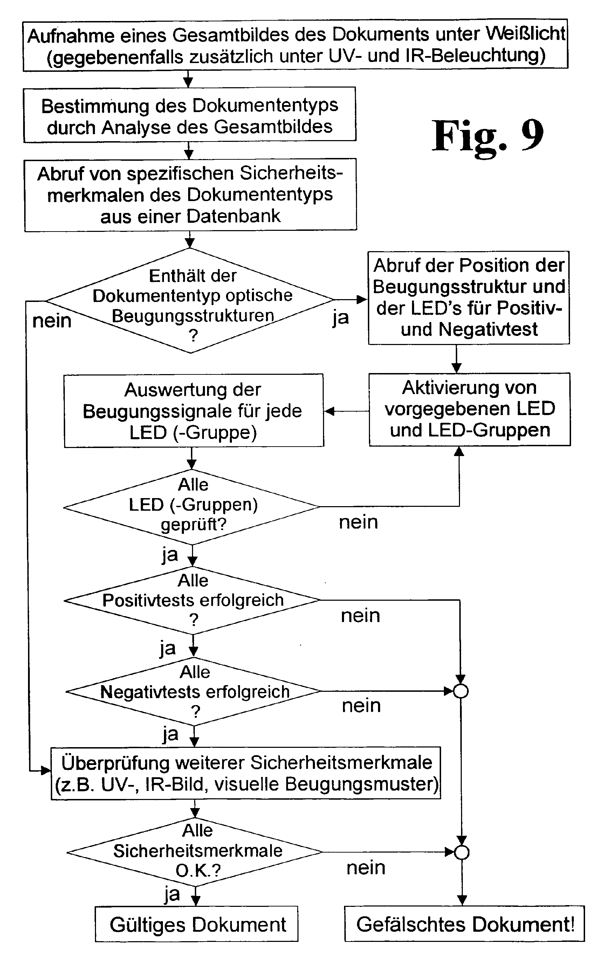

Der in Fig. 9 dargestellte Verfahrensablauf basiert auf konstruktiven Aufbauten der Fig. 6 und 7.
Mittels der Ansteuerung der Beleuchtungsarrays 25 und des synchron betriebenen Bildaufnahmesystems 35, bestehend aus Abbildungsoptik 5 und Bildsensor 34, wird eine optische Abbildung des Dokuments 1 auf dem Bildsensor 34 erzeugt und durch Anwendung von Bildverarbeitungsalgorithmen, die in einer Recheneinheit als (Träger der Steuer- und Auswerteeinheit 6) ausgeführt werden, erkannt, welcher Dokumententyp mit welcher Beugungsstruktur 11 vorliegt. Zugleich kann auch die tatsächliche Lage der Beugungsstruktur 11 erfasst werden, falls Lageabweichungen des Dokuments zugelassen werden sollen.
Nachdem der Dokumententyp festgestellt wurde, wird aus einer Datenbank die Lage der Beugungsstruktur 11 abgerufen. Die Datenbank gibt Auskunft über die konkrete Beschaffenheit der zu prüfenden Beugungsstruktur 11, d.h. unter welchen Raumwinkeln in der Normlage der Beugungsstruktur 11 Beugungssignale erwartet werden. Aus diesen Raumwinkeln (und den für die Normlage der Beugungsstruktur 11 bereits gespeicherten Positionen von Einzellichtquellen Qᵢⱼ) werden konkret aus der Bildinformation über die aktuelle Lage der Beugungsstruktur 11 und den gespeicherten Beugungswinkein jeweils Lichtquellenpositionen Qᵢⱼ' ermittelt, bei deren Aktivierung Beugungssignale auf dem Bildsensor 34 zu erwarten sind (Positivtest). Ist die für den Dokumententyp vorgeschriebenen Anzahl von Positivtests abgeschlossen, wird in Analogie zu der Vorgehensweise in Fig. 8 bewertet, ob alle durchgeschalteten Positivtests erfolgreich (oberhalb einer vorgeschriebenen Schwelle) waren. Wird dies verneint, ist das Dokument 1 ungültig (gefälscht oder beschädigt).

Zum Entdecken von Dokumentenfälschungen, bei denen anstelle der optischen Beugungsstruktur 11 ein anderes reflektierendes oder lichtablenkendes Material aufgebracht ist, werden zusätzlich zu den Einzellichtquellen Qᵢⱼ', die erwartungsgemäß Beugungssignale auf dem Bildsensor 34 erzeugen, weitere Einzellichtquellen Qᵢⱼ' gezündet, für die bei einer echten Beugungsstruktur 11 kein Beugungslicht 4 auf den Bildsensor 34 trifft (Negativtest). Bei gefälschten optischen Beugungsstrukturen 11 werden von diesen Lichtquellen trotzdem abgelenkte Strahlen auf den Bildsensor 34 treffen.
Damit ergibt sich eine zusätzliche Möglichkeit, die Echtheit des Dokumentes 1 nach folgendem Schema zu überprüfen:
I) Wurden bei der konkreten optischen Beugungsstruktur 11 erwartete gebeugte Lichtbündel 41 nicht vom Bildsensor 34 empfangen, handelt es sich um ein ungültiges (gefälschtes oder beschädigtes) Dokument.
II) Wurde bei der konkreten optischen Beugungsstruktur 11 erwartete gebeugte Lichtbündel 41 vom Bildsensor 34 empfangen, so werden weitere Einzellichtquellen Qᵢⱼ' (oder Gruppen) für einen Negativtest gezündet.
IIa) Wird bei diesen weiteren Einzellichtquellen Qᵢⱼ' (oder Gruppen) vom Bildsensor 34 Licht empfangen, handelt es sich ebenfalls um ein ungültiges (gefälschtes) Dokument.
IIb) Wird bei den weiteren Einzellichtquellen Qᵢⱼ' (oder Gruppen) von der Bildsensor 34 kein Licht empfangen, nachdem die erwarteten gebeugten Lichtbündel 41 zu den erwarteten Beugungssignalen geführt hatten, handelt es sich um ein gültiges Dokument.
III) Bei einigen Beugungsstrukturen 11 lässt sich neben der binären Information, dass der Strahl abgelenkt wird oder nicht, auch eine Intensitätsinformation auswerten, wobei beim Einlernen eines neuen Dokumententyps nicht nur die den Winkelkoordinaten (ϕ,ψ) zugeordneten Koordinaten (ij)der Einzellichtquellen Qᵢⱼ gespeichert werden, sondern zusätzlich zu den jeweiligen Koordinaten (i,j) eine zugehörige zu erwartende Intensität erfasst wird. Bei der Prüfung wird dann für eine derart angelernte Lichtquellen-Gruppe die gemessene Intensität mit der gespeicherten Intensität verglichen. Liegt die gemessene Intensität außerhalb einer definierten Toleranz, handelt es sich um ein gefälschtes (oder ein beschädigtes) Dokument.
Bei allen drei obigen Schlussfolgerungen über die Gültigkeit des Dokuments 1 wird (wie zu Fig. 8 beschrieben) durch ein Schwellwertkriterium untersucht, ob die Negativtests erfolgreich (unterhalb einer unteren Schwelle) verlaufen sind. Ist dies nicht der Fall, wird als Ergebnis das Dokument 1 als ungültig (gefälscht oder beschädigt) erklärt.
War das Ergebnis des Negativtests erfolgreich, nachdem auch die Positivtests erfolgreich waren, können zusätzlich weitere Sicherheitsmerkmale (z.B. Hologramme, Steganogramme etc.) überprüft werden, bevor - bei positivem Ausgang - das Dokument 1 als "gültiges Dokument" deklariert wird.

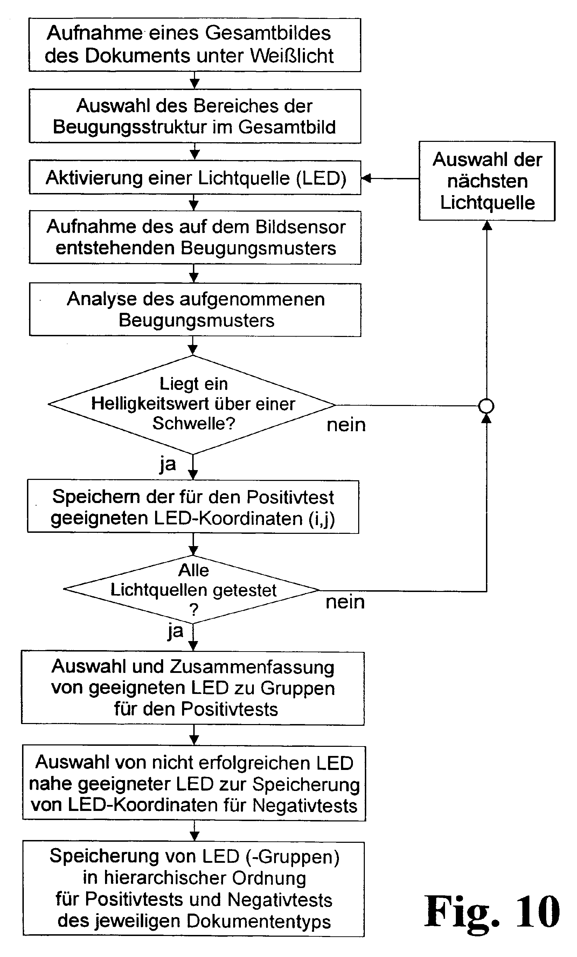

Da sich die Beugungsstrukturen 11 auf den Dokumenten 1 meist nicht genau senkrecht unter der Abbildungsoptik 5 befinden und bei unterschiedlichen Dokumententypen verschieden sind, ist es notwendig, einmal vor der Prüfung eines neuen Dokumententyps, diesen Dokumententyp anhand eines autorisierten Musterdokuments einzulernen. Dafür gibt Fig. 10 ein Verfahren an, wie ein solcher Einlernvorgang vorteilhaft ablaufen kann.
Nach dem Ausrichten des Musterdokuments an oder auf einer Auflagefläche wird unter Beleuchtung des Dokuments 1 mittels der Beleuchtungsarrays 25 über die Abbildungsoptik 5 und den Bildsensor 34 ein Gesamtbild des Musterdokuments aufgenommen, der Bereich, in dem sich die Beugungsstruktur 11 befindet, bestimmt und die Position innerhalb des gesamten Dokuments 1 gespeichert.
Danach werden die Einzellichtquellen Qᵢⱼ der Lichtquellenarrays 24 sequenziell durchgeschaltet, wobei je ein Bild vom Bildsensor 34 aufgenommen wird. Dieser Schritt lässt sich mit Kenntnis der Eigenschaften der optischen Beugungsstruktur 11 abkürzen, indem nur die Einzellichtquellen Qᵢⱼ in den erwartungsgemäß prüftechnisch sinnvollen Bereichen gezündet werden.
Durch Auswertung der so erhaltenen Bildfolge, bei der jeweils geprüft wird, ob ein Intensitätswert über einem definierten Schwellwert liegt, werden die Koordinaten (i,j) der Einzellichtquellen Qᵢⱼ bestimmt, von denen gebeugte Lichtbündel 41 auf dem Bildsensor 34 treffen (Positivtest). Diese Koordinaten (i,j) werden zunächst zwischengespeichert, um nach durchgelaufener Einschaltung aller (sinnvollen) Einzellichtquellen Qᵢⱼ die Lichtquellenpositionen auszuwählen, die zur Dokumentenprüfung am besten geeignet sind, und diese - gegebenenfalls in geeigneten Gruppen hierarchisch geordnet - zu dem entsprechenden Dokumententyp in der Datenbank zu speichern.
Bei der Prüfung von Dokumenten 1 vom Typ des Musterdokumentes können dann aus den gespeicherten Positionen (i,j) der Einzellichtquellen Qᵢⱼ unter Verwendung der durch Bildanalyse ermittelten tatsächlichen Lage gegenüber der gespeicherten Lage der zu prüfenden Beugungsstruktur 11 die Koordinaten (i',j') der aktuell zu zündenden Lichtquellen Qᵢⱼ' über einen Korrekturalgorithmus aus dem Musterdatensatz gewonnen. Die so bestimmten Einzellichtquellen Qᵢⱼ' mit den Koordinaten (i',j') werden dann seriell gezündet und eine Bildfolge zur Überprüfung aufgenommen (Positivtest).
Weiterhin werden gemäß der ermittelten tatsächlichen Lage der Beugungsstruktur 11 Koordinaten von Lichtquellen Qᵢⱼ' in der Nähe der (für den Positivtest) geeigneten Lichtquellen festgelegt, bei denen kein Beugungslicht 4 auf den Bildsensor 34 gelangen darf (Negativtest).

Bei einigen Beugungsstrukturen 11 lässt sich neben der binären Information, dass unter einem bestimmten Raumwinkel Beugungslicht 4 auftritt oder nicht auftritt, auch eine Intensitätsinformation pro gebeugtem Lichtbündel 41 auswerten. Für solche Beugungsstrukturen 11 werden beim Einlernen eines neuen Dokumententyps nicht nur die den Winkelkoordinaten (ϕ,ψ) zugeordneten Koordinaten (i,j) der geeigneten Lichtquellen 22 oder 23 (bzw. Einzellichtquellen Qᵢⱼ der Lichtquellenarrays 24) gespeichert, sondern zusätzlich zu den jeweiligen Lichtquellen-Koordinaten zugehörige zu erwartende Intensitäten der gebeugten Lichtbündel 41 erfasst.
Bei der Prüfung kann dann für eine solche angelernte Gruppe von geeigneten Lichtquellen 22 (bzw. 23 oder Einzellichtquellen Qᵢⱼ von Lichtquellen-Arrays 24) zusätzlich die gemessene Intensität mit der gespeicherten Intensität verglichen werden, wobei für Abweichungen der gemessenen von der erwarteten Intensität eine empirisch gewonnene Toleranz festzulegen ist.
Außerdem ergibt sich die Möglichkeit, eine solche Gruppe von geeigneten Lichtquellen 22 (23 oder Qᵢⱼ aus Arrays 24) bei der Prüfung gleichzeitig einzuschalten und ein Summensignal der Intensitäten zu erfassen und mit einem geeigneten Toleranzkriterium zu bewerten, wobei beim Einlernen ebenfalls ein solches Summensignal gemessen und gespeichert wird und sinnvolle Toleranzen zu ermitteln sind.

### Bezugszeichenliste

- 1: Dokument
- 11: Beugungsstruktur
- 12: Flächennormale
- 13: Lichtfleck (Spot)
- 14: erste Beugungsstruktur
- 15: zweite Beugungsstruktur

- 2: Beleuchtungseinheit
- 21: Laser
- 22: (Punkt-)Lichtquelle
- 23: (Parallel-)Lichtquelle
- 24: Lichtquellen-Array (monochrom)
- 25: Beleuchtungsarray (für Bildaufnahme)

- 3: Sensoreinheit
- 31: Schirm
- 32: Beugungsmuster
- 33: Einzelempfänger
- 34: Bildsensor
- 35: Bildaufnahmesystem

- 4: Beugungslicht
- 41: gebeugte Lichtbündel
- 42: Einfallswinkel (im Halbraum)
- 43: Parallelachse (zur Dokumentenkante)

- 5: Abbildungsoptik

- 6: Steuer- und Auswerteeinheit

- ψ, ψ₁, ψ₂: Winkel
- ϕ, ϕ₁, ϕ₂: Einfallswinkel
- Qᵢⱼ, Qₖₗ, Qᵣₛ: Einzellichtquellen
- (i,j): Koordinaten (der Einzellichtquellen)

## Patentansprüche

1. Anordnung zum Prüfen von optischen Beugungsstrukturen auf Dokumenten, bei der eine Beleuchtungseinheit zum Beleuchten mindestens der Beugungsstruktur des Dokuments und eine Sensoreinheit zum Detektieren von unter definierten Winkeln gebeugten Lichtanteilen über einer Auflagefläche des Dokumentes angeordnet sind,
**dadurch gekennzeichnet, dass**
- die Sensoreinheit (3) orthogonal über der Auflagefläche des Dokuments (1) angeordnet ist,
- die Beleuchtungseinheit (2) mindestens zwei monochromatische Lichtquellen (22, 23) enthält, die zur Aussendung von Lichtbündeln unter definierten Einfallswinkeln (42; ϕ) bezüglich einer auf der Beugungsstruktur (11; 14, 15) errichteten Flächennormale (12) des Dokuments (1) angebracht und sequenziell einschaltbar sind, wobei mindestens eine Lichtquelle (22; 23; Qᵢⱼ) einen Einfallswinkel (42aufweist, der in Richtung und Betrag mit einem Beugungswinkel (ψᵢ) übereinstimmt, unter dem ein Intensitätsmaximum des strukturspezifisch erzeugten Beugungsmusters (32) entsteht, falls die Beugungsstruktur (11; 14, 15) aus Richtung der Sensoreinheit (3) beleuchtet würde, und
- die Sensoreinheit (3) mit der Beleuchtungseinheit (2) synchronisiert ist, um den eingeschalteten Lichtquellen (22; 23; Qᵢⱼ) zugeordnete Beugungssignale zu erfassen.

2. Anordnung nach Anspruch 1, **dadurch gekennzeichnet, dass**
die Lichtquellen (22; 23; Qᵢⱼ) der Beleuchtungseinheit (2) unter verschiedenen Einfallswinkeln (42; ϕᵢ) angeordnet sind, bei denen Betrag und Richtung mit jeweils einem unterschiedlichen Beugungswinkel (ψᵢ) der Beugungsstruktur (11; 14, 15) übereinstimmen.

3. Anordnung nach Anspruch 1, **dadurch gekennzeichnet, dass**
in der Beleuchtungseinheit (2) mindestens eine weitere Lichtquelle (22; 23; Qᵢⱼ) vorhanden ist, bei der Richtung und Betrag des Einfallswinkels (42; (ϕᵢ) keinem definierten Beugungswinkel (ψᵢ) der Beugungsstruktur (11; 14, 15) zugeordnet ist.

4. Anordnung nach Anspruch 1, **dadurch gekennzeichnet, dass**
die Beleuchtungseinheit (2) flächige Lichtquellen (23) aufweist, um die Prüfung des Dokumentes (1) unempfindlicher gegenüber unterschiedlicher Lage der Beugungsstruktur (11; 14, 15) zu machen.

5. Anordnung nach Anspruch 4, **dadurch gekennzeichnet, dass**
in der Beleuchtungseinheit (2) Lichtquellen (23) mit aufgeweitetem parallelem Lichtbündel zur Beleuchtung der gesamten Beugungsstruktur (11; 14, 15) unter definierten Einfallswinkeln (42; (ϕᵢ) vorhanden sind.

6. Anordnung nach Anspruch 4, **dadurch gekennzeichnet, dass**
in der Beleuchtungseinheit (2) Gruppen von eng benachbarten Lichtquellen (Qᵢⱼ) zur Beleuchtung der gesamten Beugungsstruktur (11; 14, 15) unter definierten Einfallswinkeln (42; (ϕᵢ) vorhanden sind.

7. Anordnung nach Anspruch 4, **dadurch gekennzeichnet, dass**
die Beleuchtungseinheit (2) mindestens ein zweidimensionales Lichtquellen-Array (24) aufweist, wobei die Lichtquellen (Qᵢⱼ) des Lichtquellen-Arrays (24) einzeln oder in Gruppen ansteuerbar sind.

8. Anordnung nach Anspruch 4 oder 7, **dadurch gekennzeichnet, dass**
die Beleuchtungseinheit (2) wenigstens eine Mikroprismenfolie zur Vervielfachung der Lichtquellenorte aufweist.

9. Anordnung nach Anspruch 4 oder 7, **dadurch gekennzeichnet, dass**
die Beleuchtungseinheit (2) wenigstens eine Mikrolinsenfolie zur Parallelisierung der Beleuchtung aufweist.

10. Anordnung nach Anspruch 4 oder 7, **dadurch gekennzeichnet, dass**
die Beleuchtungseinheit (2) Fresnellinsen zur Parallelisierung der Beleuchtung aufweist.

11. Anordnung nach Anspruch 7, **dadurch gekennzeichnet, dass**
das Lichtquellen-Array (24) aus Leuchtdioden (LED) besteht.

12. Anordnung nach Anspruch 11, **dadurch gekennzeichnet, dass**
die Beleuchtungseinheit (2) mehrere zweidimensionale Lichtquellen-Arrays (24) aufweist, die parallel zu den Kanten des zu prüfenden Dokuments (1) geneigt angeordnet und einzeln einschaltbar sind.

13. Anordnung nach Anspruch 12, **dadurch gekennzeichnet, dass**
mindestens zwei gegenüberliegende Lichtquellen-Arrays (24) dieselbe Größe und Neigung aufweisen.

14. Anordnung nach Anspruch 1, **dadurch gekennzeichnet, dass**
- die Sensoreinheit (3) einen Bildsensor (34) aufweist, der aufeinanderfolgend zur Aufnahme einer optischen Abbildung des Dokuments (1) und zur Aufnahme von durch die Beugungsstruktur (11; 14, 15) gebeugten Lichts (4) vorgesehen ist, und
- die Beleuchtungseinheit zusätzliche Lichtquellen zur Erzeugung einer zur Aufnahme der optischen Abbildung geeigneten Beleuchtung enthält.

15. Anordnung nach Anspruch 14, **dadurch gekennzeichnet, dass**
die Beleuchtungseinheit (2) für die Bildaufnahme des Dokuments (1) zusätzliche Lichtquellen (25) zur Erzeugung einer Weißlichtbeleuchtung enthält.

16. Anordnung nach Anspruch 14, **dadurch gekennzeichnet, dass**
die Beleuchtungseinheit (2) für die Bildaufnahme zusätzliche Lichtquellen (25) zur Erzeugung einer Ultraviolett-Beleuchtung enthält.

17. Anordnung nach Anspruch 14, **dadurch gekennzeichnet, dass**
die Beleuchtungseinheit (2) für die Bildaufnahme zusätzliche Lichtquellen (25) zur Erzeugung einer Infrarot-Beleuchtung enthält.

18. Anordnung nach Anspruch 14, **dadurch gekennzeichnet, dass**
die Beugungsstruktur (11; 14, 15), wenn ihre Position aus der optischen Abbildung des gesamten Dokuments (1) bekannt ist, an jeder beliebigen Position bezüglich des Bildsensors (34) auf Echtheit überprüfbar ist, wobei eine geeignete Lichtquelle (Qᵢⱼ) oder Lichtquellengruppe ansteuerbar ist, bei der ein definiert an der Beugungsstruktur (11; 14, 15) gebeugtes Lichtbündel (41) den Bildsensor (34) trifft.

19. Anordnung nach Anspruch 14, **dadurch gekennzeichnet, dass**
der Bildsensor (34) zur zusätzlichen Bildaufnahme von Beugungsmustern (32) für visuelle Bewertung eingerichtet ist, wobei spezielle Lichtquellengruppen der Beleuchtungseinheit (2) für die Bewertung des visuellen Beugungsmusters (32) unter definierten Winkeln auf das visuelle Beugungsmuster (32) gerichtet sind.

20. Verfahren zum Prüfen von optischen Beugungsstrukturen auf Dokumenten, bei dem von einer Beugungsstruktur unter definierten Winkeln gebeugte Lichtanteile von einer Sensoreinheit oberhalb einer Auflagefläche des Dokumentes detektiert werden, **gekennzeichnet durch** die Schritte
- Ausrichten von mindestens zwei monochromatischen Lichtquellen (22; 23; Qᵢⱼ) auf die Beugungsstruktur (11; 14, 15) unter definierten Einfallswinkeln (42; ϕ) bezüglich der Flächennormalen (12) der Beugungsstruktur (11; 14, 15) und der Sensoreinheit (3), wobei mindestens eine Lichtquelle (22; 23; Qᵢⱼ) die Beugungsstruktur (11; 14, 15) unter einem Einfallswinkel (42; ϕ) beleuchtet, der in Richtung und Betrag mit einem Beugungswinkel der Beugungsstruktur (11; 14, 15) übereinstimmt, unter dem ein Intensitätsmaximum eines strukturspezifisch erzeugten Beugungsmusters (32) entsteht, falls die Beugungsstruktur (11; 14, 15) aus Richtung der Sensoreinheit (3) beleuchtet würde, und
- Einschalten der unterschiedlichen Lichtquellen (22; 23; Qᵢⱼ) mit verschiedenen Einfallswinkeln (42; ϕ),
- Auslesen der Sensoreinheit (3; 34) synchron zu den unterschiedlich positionierten Lichtquellen (22; 23; Qᵢⱼ), um den eingeschalteten Lichtquellen (22; 23; Qᵢⱼ) zugeordnete Beugungssignale der Beugungsstruktur (11; 14, 15) in Richtung der Sensoreinheit (3; 34) zu erfassen.

21. Verfahren nach Anspruch 20, **dadurch gekennzeichnet, dass**
die Beugungsstruktur (11; 14, 15) bezüglich der Flächennormalen (12) mit mindestens zwei Lichtquellen (22; 23; Qᵢⱼ) unter definierten Einfallswinkeln (42; ϕ) beleuchtet wird, die jeweils in Richtung und Betrag mit einem der unterschiedlichen Beugungswinkel (ψᵢ) des Beugungsmusters (32) der Beugungsstruktur (11; 14, 15) übereinstimmen, falls die Beugungsstruktur (11; 14, 15) aus Richtung der Sensoreinheit (3; 34) beleuchtet würde.

22. Verfahren nach Anspruch 20, **dadurch gekennzeichnet, dass**
- mindestens eine Lichtquelle (22; 23; Qᵢⱼ) Beugungsstruktur (11; 14, 15) bezüglich der Flächennormale (12) die unter einem Einfallswinkel (42; ϕ) beleuchtet, der in Richtung und Betrag mit einem Beugungswinkel des Beugungsmusters (32) übereinstimmt, falls die Beugungsstruktur (11; 14, 15) aus Richtung der Sensoreinheit (3) beleuchtet würde, und
- mindestens eine weitere Lichtquelle (22; 23; Qᵢⱼ) die Beugungsstruktur (11; 14, 15) bezüglich der Sensoreinheit unter einem anderen Einfallswinkel (42; ϕ) beleuchtet, der nicht mit einem Beugungswinkel des Beugungsmusters (32) der Beugungsstruktur (11; 14, 15) übereinstimmt, falls die Beugungsstruktur (11; 14, 15) aus Richtung der Sensoreinheit (3) beleuchtet würde.

23. Verfahren nach Anspruch 21 oder 22, **dadurch gekennzeichnet, dass**
die Beugungsstruktur (11; 14, 15) mit mindestens zwei Lichtquellen (22; 23; Qᵢⱼ) unter verschiedenen Einfallswinkeln (42; (ϕᵢ), die jeweils mit einem bei Beleuchtung in aus Richtung der Sensoreinheit (3) auftretenden Beugungswinkel (ψᵢ) des Beugungsmusters (32) der Beugungsstruktur (11; 14, 15) übereinstimmen, gleichzeitig beleuchtet wird, wobei die Sensoreinheit (3) in diesem Fall ein Summensignal der Intensitäten der von der Beugungsstruktur (11; 14, 15) gebeugten Lichtbündel (41) aufnimmt.

24. Verfahren nach Anspruch 20, **dadurch gekennzeichnet, dass**
zusätzlich zu den von der Beugungsstruktur (11; 14, 15) durch die Sensoreinheit (3) detektierten Beugungssignalen eine optische Abbildung des Dokuments (1) mittels eines Bildsensors (34) zur Erfassung von Bilddaten und Textinformation aufgenommen wird.

25. Verfahren nach Anspruch 24, **dadurch gekennzeichnet, dass**
die von der Beugungsstruktur (11; 14, 15) erzeugten Beugungssignale ebenfalls mittels des Bildsensors (34) aufgenommen werden.

26. Verfahren nach Anspruch 24, **dadurch gekennzeichnet, dass**
zur Beleuchtung von unterschiedlichen Beugungsstrukturen (11; 14, 15) verschiedener Dokumentenarten Lichtquellen (Qᵢⱼ) in regelmäßig geordneten Lichtquellen-Arrays (24) angeordnet, geeignet für die jeweilige Beugungsstruktur (11; 14, 15) ausgewählt und eingeschaltet werden.

27. Verfahren nach Anspruch 26, **dadurch gekennzeichnet, dass**
aus der Bildinformation die Art und Lage der Beugungsstruktur (11; 14, 15) bezüglich des Bildsensors (34) ermittelt und geeignete Lichtquellen (Qᵢⱼ) der Lichtquellen-Arrays (24) seriell eingeschaltet werden, für die der Einfallswinkel (42; ϕ) des Lichtbündels der Lichtquelle (Qᵢⱼ) und der Austrittswinkel (ψ) des von der Beugungsstruktur (11; 14, 15) gebeugten Lichtbündels (41) zusammengenommen jeweils zu einem definierten Beugungssignal auf dem Bildsensor (34) führen.

28. Verfahren nach Anspruch 27, **dadurch gekennzeichnet, dass**
nach dem Einschalten geeigneter Lichtquellen (Qᵢⱼ) zur Erfassung eines Beugungssignals auf dem Bildsensor (34) weitere Lichtquellen (Qᵢⱼ) der Lichtquellen-Arrays (24) eingeschaltet werden, für die der Einfallswinkel (42; ϕ) der Lichtquelle (Qᵢⱼ) und der Austrittswinkel (ψ) des gebeugten Lichtbündels (41) zusammengenommen bei einer bekannten Beugungsstruktur (11; 14, 15) kein Beugungssignal auf dem Bildsensor (34) erzeugen dürfen.

29. Verfahren nach Anspruch 27 oder 28, **dadurch gekennzeichnet, dass**
Gruppen von benachbarten Lichtquellen (Qᵢⱼ) mit im wesentlichen gleichem Einfallswinkel (42; (ϕ) bezüglich der Beugungsstruktur (11; 14, 15) gleichzeitig eingeschaltet werden.

30. Verfahren nach Anspruch 26, **dadurch gekennzeichnet, dass**
Gruppen von Lichtquellen (22; 23; Qᵢⱼ) mit unterschiedlichen Einfallswinkeln (42; (ϕᵢ) bezüglich der Beugungsstruktur (11; 14, 15) gleichzeitig eingeschaltet werden, um ein Summensignal von Intensitäten von unterschiedlichen an der Beugungsstruktur (11; 14, 15) gebeugten Lichtbündeln (41) zu erfassen, so dass in kürzerer Messzeit ein Prüfergebnis von der Beugungsstruktur (11; 14, 15) vorliegt.

31. Verfahren nach Anspruch 26, **dadurch gekennzeichnet, dass**
die geeigneten Lichtquellen (22; 23; Qᵢⱼ) für die Prüfung der Beugungsstruktur (11; 14, 15) eines neuen Dokumententyps durch Vorlegen eines autorisierten Musterdokuments mit verschieden positionierter Beugungsstruktur (11; 14, 15) eingelernt werden, indem Positionen geeigneter Lichtquellen(22; 23; Qᵢⱼ), bei denen gebeugte Lichtbündel (41) ein maximales Beugungssignal auf dem Bildsensor (34) ergeben, ausgewählt und gespeichert werden.

32. Verfahren nach Anspruch 26, **dadurch gekennzeichnet, dass**
für die Prüfung der Beugungsstruktur (11; 14, 15) eines neuen Dokumententyps zusätzlich zum Einlernen geeigneter Lichtquellen (22; 23; Qᵢⱼ) weitere Lichtquellen, bei denen kein Beugungssignal auf dem Bildsensor (34) erzeugt wird, durch Vorlegen eines autorisierten Musterdokuments mit verschieden positionierter Beugungsstruktur (11; 14, 15) eingelernt werden, indem Positionen der weiteren Lichtquellen, die kein Beugungslicht auf dem Bildsensor (34) erzeugen, ausgewählt und gespeichert werden.

33. Verfahren nach Anspruch 31 oder 32, **dadurch gekennzeichnet, dass**
zum Ausgleich von kleinen Lageabweichungen der Beugungsstruktur (11; 14, 15) Positionen von Lichtquellen (22; 23; Qᵢⱼ) eingelernt und gespeichert werden, bei denen an der Beugungsstruktur (11; 14, 15) gebeugtes Licht (4) ein noch hinreichend unterscheidungskräftiges Beugungssignal auf dem Bildsensor (34) ergeben.
